# EUROPEAN PATENT APPLICATION

(11) **EP 4 467 729 A1**
(43) Date of publication of application: **27.11.2024**
(21) Application number: 24175896.0
(22) Date of filing: 15.05.2024
(51) Int. Cl.: E02F 9/20, E02F 3/43, E02F 9/12, E02F 9/22, E02F 9/26, E02F 9/24

(54) **WORK MACHINE CONTROL METHOD, WORK MACHINE CONTROL PROGRAM, WORK MACHINE CONTROL SYSTEM, AND WORK MACHINE**

(30) Priority: 23.05.2023 JP 2023084426
(71) Applicant: Yanmar Holdings Co., Ltd., Osaka-shi, Osaka (JP)
(72) Inventor: OKAZAKI, Kohei, Chikugo-shi (JP)
(74) Representative: Dennemeyer & Associates S.A.

(57) **Abstract**

[Problem] A work machine control method, a work machine control program, a work machine control system, and a work machine, each of which easily improves work efficiency, are provided.

[Solution] A method for controlling a work machine 3 includes executing a restriction process of restricting a motion of the work machine 3 when a result of detection performed by a detector 13 that detects a detection target in a monitoring area around the work machine 3 satisfies a specific condition and a specific operation is performed on an operation device 5 of the work machine 3.

## Description

### TECHNICAL FIELD

The present disclosure relates to a work machine control method, a work machine control program, and a work machine control system that are used for a work machine having a function of detecting a detection target in a monitoring area around the work machine, and to the work machine.

### BACKGROUND ART

As a related technology, a work machine having a controller for determining whether a person is present around the work machine (excavator) is known (refer to, Patent Document 1, for example). In the work machine according to the related technology, when a person is detected around the work machine while the work machine is in a workenabled state, a work-disabled state in which an operator may not operate the work machine is continued.

### PRIOR ART DOCUMENT

### PATENT DOCUMENT

Patent Document 1: JP 2020-139393 A

### SUMMARY OF INVENTION

### TECHNICAL PROBLEM

In the related technology, as long as a person is detected around the work machine, the work machine continues the work-disabled state without any condition, and therefore, when the work machine is operated in an environment in which a worker works around the work machine, the work machine frequently enter the work-disabled state, and accordingly, work efficiency may be degraded.

An object of the present disclosure is to provide a work machine control method, a work machine control program, a work machine control system, and a work machine that easily improve the work efficiency.

### SOLUTION TO PROBLEM

According to an aspect of the present disclosure, a work machine control method includes executing a restriction process of restricting a motion of a work machine when a result of detection performed by a detector that detects a detection target in a monitoring area around the work machine satisfies a specific condition and a specific operation is performed on an operation device of the work machine.

According to another aspect of the present disclosure, a work machine control program is a program that causes one or more processors to execute the work machine control method.

According to a further aspect of the present disclosure, a work machine control system includes a restriction processor. The restriction processor restricts a motion of the work machine when a result of detection performed by a detector that detects a detection target in a monitoring area around the work machine satisfies a specific condition and a specific operation is performed on an operation device of the work machine.

According to a still further aspect of the present disclosure, a work machine includes the work machine control system and a machine body.

### ADVANTAGEOUS EFFECTS OF INVENTION

According to the present disclosure, a work machine control method, a work machine control program, a work machine control system, and a work machine that easily improve the work efficiency may be provided.

### BRIEF DESCRIPTION OF DRAWINGS

FIG. 1 is a perspective view schematically illustrating an entire configuration of a work machine according to a first embodiment.
FIG. 2 is a diagram schematically illustrating a hydraulic circuit and the like of the work machine according to the first embodiment.
FIG. 3 is a plan view schematically illustrating a monitoring area and the like set around the work machine according to the first embodiment viewed from above the work machine.
FIG. 4 is a schematic external view of a display device on which a display screen is displayed by a work machine control system according to the first embodiment.
FIG. 5 is a diagram schematically illustrating an example of an operation of detecting a detection target performed by the work machine control system according to the first embodiment.
FIG. 6 is a diagram schematically illustrating an example of an operation of detecting a detection target performed by the work machine control system according to the first embodiment.
FIG. 7 is a flowchart of an example of an operation performed by the work machine control system according to the first embodiment.

### DESCRIPTION OF EMBODIMENTS

Hereinafter, an embodiment of the present disclosure will be described with reference to the accompanying drawings. The following embodiment is an example that embodies the present disclosure, and does not intend to limit the technical scope of the present disclosure.

### First Embodiment

### 1. Entire configuration

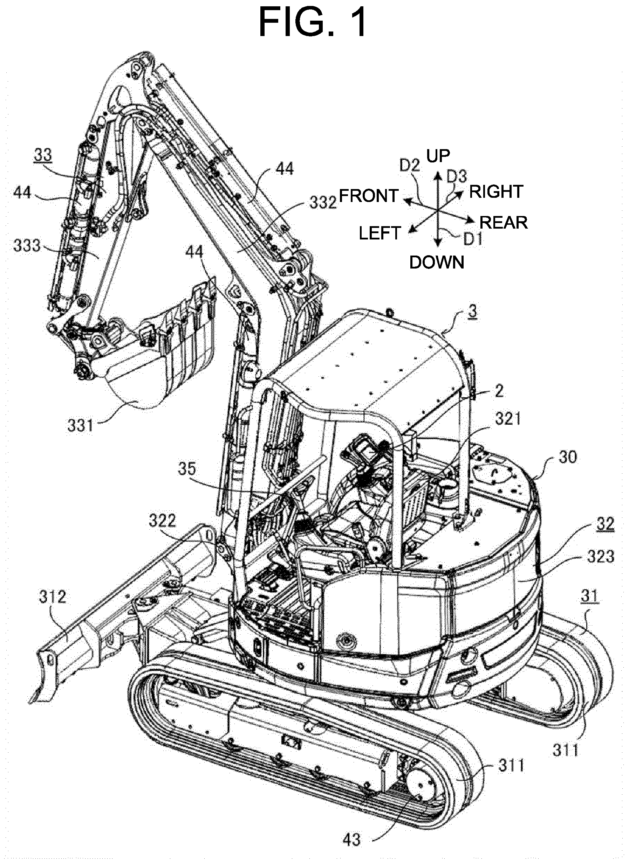

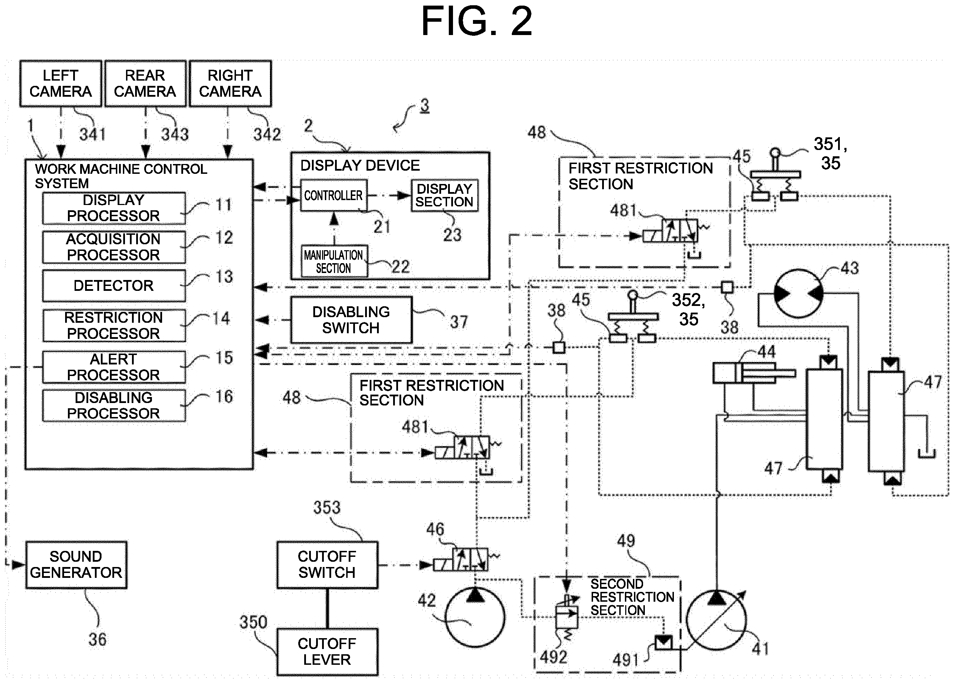

As illustrated in FIG. 1, a work machine 3 according to this embodiment includes a machine body 30 having a traveling section 31, a swivel section 32, and a work section 33. The work machine 3 further includes a work machine control system 1 (hereinafter, simply referred to as a "control system 1" where appropriate), as illustrated in FIG. 2. Furthermore, the machine body 30 includes a display device 2 and an operation device 35.

The term "work machine" as used in the present disclosure refers to various machines used to perform work, and refers to, for example, a work vehicle, such as a backhoe (including a hydraulic excavator, a mini excavator, etc.), a wheel loader, or a carrier. The work machine 3 includes the work section 33 capable of performing at least one task including a lifting task. The work machine 3 may not necessarily be a "vehicle", and may be, for example, a work ship, a work flying object, such as a drone or a multicopter, or the like.
Furthermore, the work machine 3 may not necessarily be a construction machine, and may be, for example, an agricultural machine, such as a rice transplanter, a tractor, or a combine harvester. In this embodiment, unless otherwise specified, a case where the work machine 3 is a backhoe with a lifting function (with a crane function) and can perform excavation work, ground leveling work, trenching work, or loading work as well as lifting work is taken as an example.

For convenience of description, in this embodiment, an up-down direction D1 is defined as a vertical direction while the work machine 3 is in a usable state. Furthermore, a front-rear direction D2 and a rightleft direction D3 are defined based on a direction viewed from a user (operator) seated in (operator section 321 of) the work machine 3 in a non-swiveling state of the swivel section 32. In other words, the individual directions used in this embodiment are defined with reference to the machine body 30 of the work machine 3, and a direction in which the machine body 30 moves when the work machine 3 moves forward is a "front direction" while a direction in which the machine body 30 moves when the work machine 3 moves backward is a "rear direction". Similarly, a direction in which a front end portion of the machine body 30 moves when the work machine 3 swivels to the right is referred to as a "right side", and a direction in which the front end portion of the machine body 30 moves when the work machine 3 swivels to the left is referred to as a "left side". However, the directions of the work machine 3 in use are not limited to these directions.

The work machine 3 includes an engine that serves as a power source. In the work machine 3, the machine body 30 is driven, for example, when the engine drives a hydraulic pump 41 (refer to FIG. 2) so that hydraulic oil is supplied from the hydraulic pump 41 to hydraulic actuators (including hydraulic motors 43 and hydraulic cylinders 44) in sections of the machine body 30. For example, a user (operator) who is seated in the operator section 321 of the machine body 30 operates operation levers 351 and 352 (refer to FIG. 2) of the operation device 35 to control the work machine 3.

In this embodiment, it is assumed that the work machine 3 is a riding-type backhoe as described above, and therefore, the work section 33 is driven in accordance with an operation performed by the user (operator) who is seated in the operator section 321, and performs the work, such as excavation work. The operator section 321 in which the user is seated is provided in the swivel section 32.

The traveling section 31 has a traveling function and is capable of traveling (also swiveling) on the ground. The traveling section 31 includes, for example, a pair of right and left crawlers 311 and a blade 312. The traveling section 31 further includes, for example, the hydraulic motors 43 (hydraulic actuators) for traveling, in order to drive the crawlers 311.

The swivel section 32 is disposed on the traveling section 31, and can swivel, relative to the traveling section 31, about a rotation shaft extending in the vertical direction. The swivel section 32 includes a hydraulic motor (hydraulic actuator) for swiveling, and the like. In addition to the operator section 321, the swivel section 32 includes the engine and the hydraulic pump 41. At a front end portion of the swivel section 32, a boom bracket 322 to which the work section 33 is attached is disposed.

The work section 33 is capable of executing operations including a lifting operation. The work section 33 is supported by the boom bracket 322 of the swivel section 32 and performs operations. The work section 33 includes a bucket 331, a boom 332, and an arm 333. The work section 33 further includes the hydraulic actuators (including the hydraulic cylinders 44 and the hydraulic motor) for driving the sections.

The bucket 331 is a type of attachments (work implements) that may be attached to the machine body 30 of the work machine 3 and is any implement selected from a plurality of types of attachments according to content of a task. As an example, the bucket 331 is detachably attached to the machine body 30 and replaced according to content of a task. In addition to the bucket 331, examples of attachments for the work machine 3 include various tools, such as a breaker, an auger, a crusher, a fork, a fork claw, a steel frame cutter, an asphalt milling machine, a mower, a ripper, a mulcher, a tilt rotator, and a tamper. The work section 33 executes an operation by driving the bucket 331 with power from the driving device.

The boom 332 is supported by the boom bracket 322 of the swivel section 32 in a turn available manner. More specifically, the boom 332 is supported by the boom bracket 322 in a manner to be turned about a turning shaft extending in a horizontal direction. The boom 332 has a shape that extends upward from a base end portion supported by the boom bracket 322. The arm 333 is coupled to a tip end of the boom 332. The arm 333 is supported by the boom 332 to be turned around a turning shaft extending in the horizontal direction. The bucket 331 is attached to a tip of the arm 333.

The work section 33 moves when receiving power from the engine serving as a power source. Specifically, the hydraulic pump 41 is driven by the engine, and hydraulic oil is supplied from the hydraulic pump 41 to the hydraulic actuators (the hydraulic cylinders 44, etc.) of the work section 33 to cause the components (the bucket 331, the boom 332, and the arm 333) of the work section 33 to be moved.

In particular, in this embodiment, the work section 33 has a multi-joint structure in which the boom 332 and the arm 333 can be individually turned. Thus, each of the boom 332 and the arm 333 can be turned around the rotation shaft extending in the horizontal direction, for example, to allow the articulated work section 33 including the boom 332 and the arm 333 as a whole to be extended or retracted.

As with the work section 33, each of the traveling section 31 and the swivel section 32 is operated by the power received from the engine as a power source. That is, the hydraulic oil is supplied from the hydraulic pump 41 to the hydraulic motors 43 of the traveling section 31, the hydraulic motor of the swivel section 32, and the like to cause the swivel section 32 and the traveling section 31 to be moved.

As described above, the engine functions as a power source that supplies power to the components. The engine is mounted together with the hydraulic pump 41 and the like in the swivel section 32. This embodiment describes an example in which the engine is a diesel engine. The engine is driven by fuel (light oil in this case) supplied from a fuel tank.

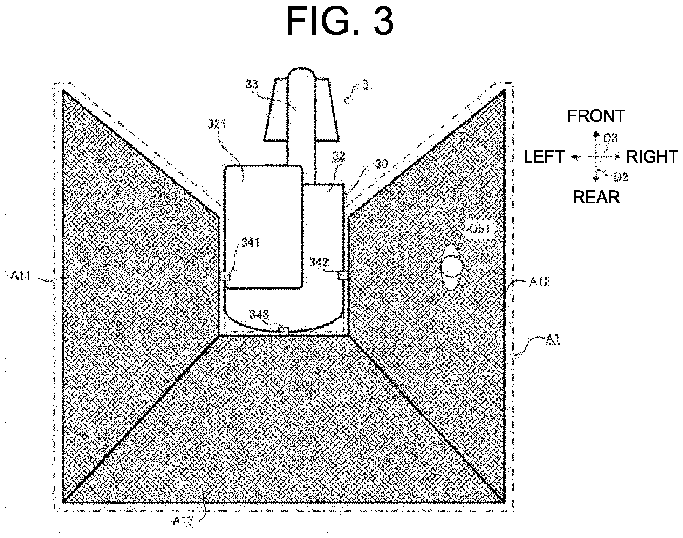

Here, the machine body 30 includes various types of sensor (including cameras) that detect a detection target Ob1 (refer to FIG. 3) in a monitoring area A1 (refer to FIG. 3) surrounding the work machine 3, such as cameras that photograph areas surrounding the machine body 30. As an example, as illustrated in FIG. 3, a plurality of cameras (in this example, three cameras), including a left camera 341, a right camera 342, and a rear camera 343, are mounted on the swivel section 32 of the machine body 30 in this embodiment. The left camera 341, the right camera 342, and the rear camera 343 are connected to a control system 1 and output, to the control system 1, images captured by the individual cameras. FIG. 3 is a plan view of the work machine 3 viewed from above, schematically illustrating the monitoring area A1 set around the work machine 3, the detection target Ob1, and the machine body 30 of the work machine 3 (including the left camera 341, the right camera 342, and the rear camera 343).

The left camera 341, the right camera 342, and the rear camera 343 are installed to face leftward, rightward, and rearward, respectively, with respect to the operator section 321 so as to capture images of a left side, a right side, and a rear side in the monitoring area A1 as viewed from the operator seated in the operator section 321 of the swivel section 32. In other words, as illustrated in FIG. 3, the monitoring area A1 includes a plurality of (herein, three) small areas A11, A12, and A13, and the left camera 341 captures an image of the small area A11 (left area) which is on the left as viewed from the operator seated in the operator section 321. Similarly, the right camera 342 captures an image of the small area A12 (right area) which is on the right as viewed from the operator seated in the operator section 321, and the rear camera 343 captures an image of the small area A13 (rear area) which is at the rear as viewed from the operator seated in the operator section 321. This enables the left camera 341, the right camera 342, and the rear camera 343 to cover the both sides (left and right) and the rear side which are often blind spots for the operator.

In FIG. 2, a hydraulic circuit and an electric circuit (electric connections) of the work machine 3 according to this embodiment are schematically illustrated. In FIG. 2, solid lines represent high-pressure oil paths (for hydraulic oil), dotted lines represent low-pressure oil paths (for pilot oil), and dashed-dotted line arrows represent electric signal paths. In addition, a thick (solid) line between a cutoff lever 350 and a cutoff switch 353 represents a physical connection between the cutoff lever 350 and the cutoff switch 353.

As illustrated in FIG. 2, the work machine 3 includes a pilot pump 42, remote control valves 45, a control valve 46, direction switching valves (control valves) 47, a first restriction section 48, and a second restriction section 49, in addition to the hydraulic pump 41, the hydraulic motors 43, and the hydraulic cylinders 44. The work machine 3 further includes the cutoff lever 350, the cutoff switch 353, a sound generator 36, a disabling switch 37, and pressure sensors 38. Although only the hydraulic motors 43 of the traveling section 31 are illustrated in FIG. 2, the same hydraulic circuit is configured also for the hydraulic motor of the swivel section 32. Although only one hydraulic cylinder 44 for driving the boom 332 is illustrated in FIG. 2, the same hydraulic circuit is configured also for the hydraulic cylinders 44 for driving the arm 333, the bucket 331, and the like.

The hydraulic oil is supplied from the hydraulic pump 41 driven by the engine to the hydraulic motors 43 of the traveling section 31, the hydraulic motor of the swivel section 32, the hydraulic cylinders 44 of the work section 33, and the like. Thus, the hydraulic actuators, such as the hydraulic motors 43 and the hydraulic cylinders 44, are driven.

Each of the hydraulic actuators, such as the hydraulic motors 43 and the hydraulic cylinders 44, includes the pilot-type direction switching valve 47 capable of changing a direction and a flow rate of the hydraulic oil supplied from the hydraulic pump 41. Pilot oil serving as an input instruction is supplied from the pilot pump 42 to the direction switching valve 47 to drive the direction switching valve 47.

Here, one of the remote control valves 45 is disposed, for example, in a supply path of the pilot oil to the direction switching valve 47 corresponding to the hydraulic motor 43 of the traveling section 31. The remote control valve 45 outputs a traveling operation instruction of the traveling section 31 in response to an operation performed on the operation device 35 (operation lever 351). The traveling operation command causes the traveling section 31 to perform a traveling motion (forward movement, rearward movement, etc.).

Similarly, one of the remote control valves 45 is also disposed in a supply path of the pilot oil to the direction switching valve 47 corresponding to the hydraulic cylinder 44 of the work section 33. This remote control valve 45 outputs a work operation instruction of the work section 33 in response to an operation performed on the operation device 35 (operation lever 352). The work operation instruction instructs an expanding operation, a retracting operation, and the like of the work section 33. Furthermore, a remote control valve is also disposed in a supply path of the pilot oil to a direction switching valve 47 corresponding to the hydraulic motor of the swivel section 32. This remote control valve outputs a swivel operation instruction for the swivel section 32 in response to an operation performed on the operation device 35 (operation lever). The swivel operation instruction instructs a swivel motion (for example, left swivel or right swivel) of the swivel section 32.

Furthermore, the supply paths of the pilot oil to the direction switching valves 47 include the respective first restriction sections 48. Each of the first restriction sections 48 includes a first control valve 481. Each of the first control valves 481 is an electromagnetic control valve (solenoid valve), and inserted in series between the remote control valve 45 and the pilot pump 42. Each of the first control valves 481 is connected to the control system 1 and operates in response to a control signal (supply current) supplied from the control system 1 to adjust a flow rate of the pilot oil to be supplied from the pilot pump 42 to the remote control valve 45. In this embodiment, the first restriction section 48 can shut off the flow path of the pilot oil to be supplied to the remote control valve 45 by closing at least the first control valve 481, thereby stopping supply of the hydraulic oil from the hydraulic pump 41 to the hydraulic actuators (hydraulic motor 43, hydraulic cylinder 44, and the like) corresponding to the remote control valve 45. The hydraulic actuators to which the supply of the hydraulic oil from the hydraulic pump 41 has stopped are disabled, and the hydraulic actuators are forcibly stopped regardless of the operation of the operation device 35.

The direction switching valves 47, the remote control valves 45, and the first restriction sections 48 are disposed not only for the hydraulic circuit of the hydraulic motor 43 of the traveling section 31 and the hydraulic cylinder 44 for driving the boom 332, but also for a hydraulic circuit of the hydraulic motor of the swivel section 32 and the hydraulic cylinders 44 for driving the arm 333 and the bucket 331, etc. Thus, each of the traveling section 31, the swivel section 32, and the work section 33 can be moved in response to an operation performed on the operation device 35.

Furthermore, a control valve 46 serving as a cutoff valve is disposed on an upstream of the pilot oil as viewed from the first restriction section 48 (first control valve 481). The control valve 46 includes an (electromagnetic) proportional control valve, and is inserted between the pilot pump 42 and the plurality of first control valves 481. The control valve 46 is connected to a power supply via the cutoff switch 353 and operates in response to a supply current from the power supply. Here, the control valve 46 shuts off the flow path of the pilot oil in an energized state, i.e., in a state of a current as a control signal being supplied, and opens the flow path of the pilot oil in a de-energized state, i.e., in a state of the current as the control signal being cut off. Therefore, supply of the supply current to the control valve 46 disables driving of the hydraulic actuators (such as the hydraulic cylinders 44), and accordingly, the hydraulic actuators are forcibly stopped regardless of an operation of the operation device 35.

The cutoff switch 353 is interlocked with the cutoff lever 350. The cutoff lever 350 disposed in the operator section 321 of the machine body 30 receives an operation input by the user (operator). As an example in this embodiment, the cutoff lever 350 may be operated in the up-down direction D1. When the cutoff lever 350 is at a "raised position" which is an upper end position in a movable range, the cutoff switch 353 is "on", and when the cutoff lever 350 is at a "lowered position" which is a lower end position in the movable range, the cutoff switch 353 is "off". Then, the cutoff switch 353 is connected to the control system 1, and an on state or an off state of the cutoff switch 353 is monitored by the control system 1.

Therefore, when the cutoff lever 350 is in the "lowered position" and in an unlocked state, the control valve 46 is brought in the de-energized state, thus driving the hydraulic actuators (such as hydraulic cylinders 44) in response to an operation performed on the operation device 35. On the other hand, when the cutoff lever 350 is in the "raised position" and in a locked state, the control valve 46 is brought in the energized state, thus forcibly stopping the hydraulic actuator regardless of the operation performed on the operation device 35. Therefore, the user (operator) is required to operate the cutoff lever 350 to the "lowered position" so that the hydraulic actuators (such as hydraulic motors 43) are driven.

Furthermore, each of the traveling section 31, the swivel section 32, and the work section 33 also moves when the hydraulic oil is supplied from the hydraulic pump 41 to the hydraulic actuators (such as hydraulic motors 43 and hydraulic cylinders 44), and therefore, the cutoff lever 350 being in the "raised position" (locked state) causes the traveling section 31, the swivel section 32, and the work section 33 to be disabled. That is, when the cutoff lever 350 is in the "raised position", the traveling section 31, the swivel section 32, and the work section 33 are all forcibly disabled.

In short, the cutoff switch 353, when being on, is in a "locked state" in which a motion of the work machine 3 is restricted (including prohibition), and when being off, is in an "unlocked state" in which a motion of the work machine is not restricted. Then, the cutoff lever 350 being in the "raised position" and the cutoff switch 353 being in the locked state (on) forcibly restrict a motion of the work machine 3 regardless of an operation of the operation device 35. The cutoff lever 350 is operated to lock a motion of the work machine 3 in the above manner, and is synonymous with a gate lock lever. Furthermore, both the first control valve 481 and the control valve 46, in this embodiment, are assumed to be (electromagnetic) proportional control valves, but may also be switchable open/close valves that open/shut off the flow path, for example.

In addition, the flow rate of the hydraulic oil supplied from the hydraulic pump 41 is not fixed, and can be changed (variable) by an appropriate method. The work machine 3 according to this embodiment includes a second restriction section 49 which adjusts the flow rate of the hydraulic oil. As an example in this embodiment, the hydraulic pump 41 includes a variable capacity pump that can change an amount of the hydraulic oil to be discharged per revolution of a drive shaft.

The second restriction section 49 includes a control signal input port 491 and an electromagnetic proportional valve 492. The control signal input port 491 receives a control signal for adjusting a discharge rate (flow rate) of the hydraulic oil of the hydraulic pump 41 constituted by the variable capacity pump. Specifically, the pilot oil which serves as the control signal is supplied from the pilot pump 42 to the control signal input port 491, and a hydraulic oil discharge rate of the hydraulic pump 41 changes in accordance with a supply rate (pilot pressure) of the pilot oil. The electromagnetic proportional valve 492 is an electromagnetic proportional control valve disposed on a pilot oil supply path to the control signal input port 491, and adjusts the pilot pressure input to the control signal input port 491. The electromagnetic proportional valve 492 is electrically connected to the control system 1, and in accordance with the control signal (supply current) from the control system 1, adjusts the pilot pressure to be input to the control signal input port 491, thereby to change the hydraulic oil discharge rate of the hydraulic pump 41.

Thus, the second restriction section 49 can adjust the flow rate of the hydraulic oil discharged from the hydraulic pump 41 by controlling at least one of the flow rate of the hydraulic pump 41 that supplies the hydraulic oil and the pilot pressure. The second restriction section 49 may, without steps, continuously vary the flow rate of the hydraulic oil discharged from the hydraulic pump 41, or may vary the flow rate at steps (for example, 2, 5, or 10 steps). In this embodiment, the second restriction section 49 may shut off the flow path of the pilot oil to be supplied to the control signal input port 491 by closing at least the electromagnetic proportional valve 492, thereby stopping the supply of the hydraulic oil from the hydraulic pump 41. When the supply of the hydraulic oil from the hydraulic pump 41 stops, the hydraulic actuators, such as the hydraulic motors 43 of the traveling section 31, the hydraulic motor of the swivel section 32, and the hydraulic cylinders 44 of the work section 33 all stop.

The operation device 35 is disposed in the operator section 321 of the machine body 30 and is a user interface for accepting an operation input by the user (the operator). The operation device 35 includes the operation levers 351 and 352 and controls a remote control valve 45 in accordance with an amount of operation performed on the operation lever 351 or 352.

Specifically, the operation lever 351 accepts an operation relating to a traveling motion (forward traveling, backward traveling, or the like) of the traveling section 31, and the operation device 35 controls the remote control valves 45 corresponding to the hydraulic motors 43 of the traveling section 31 in accordance with an amount of operation performed on the operation lever 351. The operation lever 352 accepts an operation relating to an extending movement or a retracting movement of the work section 33, and the operation device 35 controls the remote control valves 45 corresponding to the hydraulic cylinders 44 of the work section 33 in accordance with an amount of operation performed on the operation lever 352. By this, the operator may operate the remote control valves 45 by operating the operation device 35 to instruct a direction and a flow rate of the hydraulic oil supplied from the hydraulic pump 41, and may thereby move the work machine 3.

The pressure sensors 38 detect pressures of the pilot oil between the remote control valves 45 and the direction switching valves 47. The pressure sensors 38 are connected to the control system 1, and pressure detection signals indicative of the pressures detected by the pressure sensors 38 are input to the control system 1. In a state in which both the first control valve 481 and the control valve 46 open the pilot oil flow path, operation states of the remote control valves 45, that is, operation states of the operation levers 351 and 352 (the operation device 35) are reflected to the pressures detected by the pressure sensors 38.

The control system 1 is mainly composed of a computer system including one or more processors, such as a central processing unit (CPU), and one or more memories, such as a read only memory (ROM) and a random access memory (RAM), and performs various types of processing (information processing). In this embodiment, the control system 1 is an integrated controller that controls the entire work machine 3 and is configured by, for example, an electronic control unit (ECU). However, the control system 1 may be disposed separately from the integrated controller. The control system 1 will be described in detail in "2 Configuration of Control System".

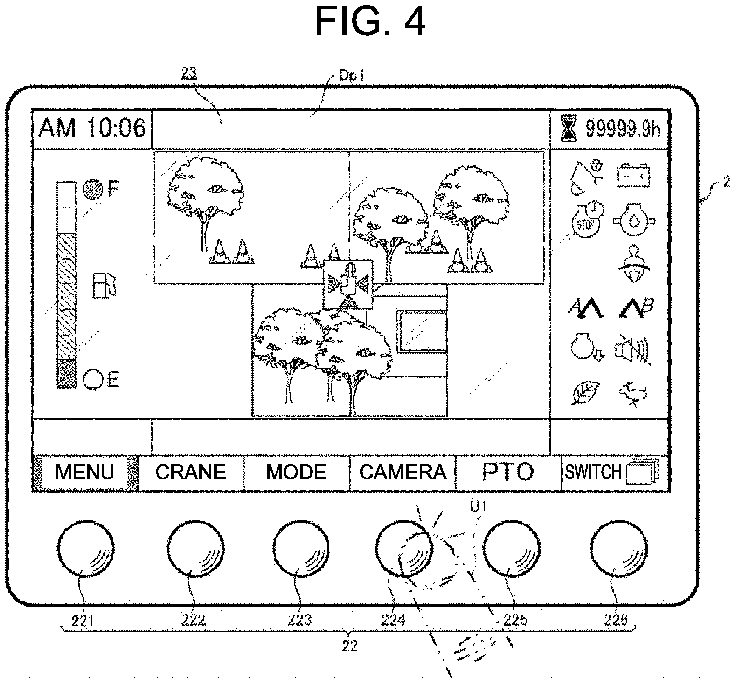

The display device 2 is a user interface that is disposed in the operator section 321 of the machine body 30 and that is used to accept an operation input performed by the user (operator) and to output various types of information to the user. For example, the display device 2 outputs electric signals corresponding to operations performed by the user to receive various operations performed by the user. By this, the user (operator) can view a display screen Dp1 (refer to FIG. 4) displayed on the display device 2, and also can operate the display device 2 where appropriate.

As illustrated in FIG. 2, the display device 2 includes a controller 21, a manipulation section 22, and a display section 23. The display device 2 is communicable with the control system 1 and can exchange data with the control system 1. In this embodiment, as one example, the display device 2 is a dedicated device used in the work machine 3.

The controller 21 controls the display device 2 in accordance with the data supplied from the control system 1. Specifically, the controller 21 outputs an electric signal corresponding to an operation that is performed by a user and received by the manipulation section 22, and causes the display screen Dp1 generated by the control system 1 to be displayed on the display section 23.

The manipulation section 22 is a user interface for accepting an operation input by the user (operator) to the display screen Dp1 displayed on the display section 23. For example, the manipulation section 22 outputs electric signals corresponding to operations performed by a user U1 (refer to FIG. 4) to accept various operations performed by the user U1. As an example, the manipulation section 22 includes a plurality of (six in this embodiment) mechanical push button switches 221 to 226 as illustrated in FIG. 4 in this embodiment. The plurality of push button switches 221 to 226 are disposed in the vicinity of a display region of the display section 23 along a periphery of the display region (a lower portion in the example in FIG. 4). The plurality of push button switches 221 to 226 are associated with items displayed on the display screen Dp1 described below, and when one of the plurality of push button switches 221 to 226 is operated, a corresponding one of the items on the display screen Dp1 is operated (selected).

Furthermore, the manipulation section 22 may include a touch panel and an operation dial. In this case as well, it is deemed that operating the manipulation section 22 operates (selects) any of the items on the display screen Dp1.

The display section 23 is a user interface, which is for presenting information to the user U1 (operator), such as a liquid crystal display or an organic EL display that displays various types of information. The display section 23 displays various types of information to present such information to the user. As one example in this embodiment, the display section 23 is a full-color liquid crystal display with a backlight, and has a "horizontally-long" display region that is long in a horizontal direction, as illustrated in FIG. 4.

The display device 2 presents various types of information on the display screen Dp1 to the user U1 (operator) who operates the work machine 3. Thus, the user U1 who operates the work machine 3 may view the display screen Dp1 displayed on the display device 2 to visually obtain various types of information relating to the work machine 3. For example, when the display device 2 displays information on an operation state of the work machine 3, such as cooling water temperature and hydraulic oil temperature, the user U1 can view, on the display device 2, the information on the operation state of the work machine 3 that is required to operate the work machine 3. The display device 2 is further capable of displaying, on the display screen Dp1, images of regions around the work machine 3 (images of the monitoring area A1) that are captured by the left camera 341, the right camera 342, and the rear camera 343. This enables the user U1 (operator) who operates the work machine 3 to view, on the display screen Dp1 displayed on the display device 2, for example, a situation in the regions on the lateral sides and the rear side of the work machine 3, which are likely to be blind spots of the operator section 321.

The sound generator 36 includes a buzzer or a speaker and outputs sound upon receiving an electric signal. The sound generator 36 is connected to the control system 1 and outputs the sound, such as a beep or voice, in response to a sound control signal supplied from the control system 1. In this embodiment, the sound generator 36, as well as the display device 2, is disposed in the operator section 321 of the machine body 30. The sound generator 36 may integrally be provided with the display device 2.

The disabling switch 37 is a user interface for accepting an operation input performed by the user (the operator). The disabling switch 37 constituted by a push button switch, for example, is connected to the control system 1, and outputs an operation signal to the control system 1. In this embodiment, the disabling switch 37, as well as the display device 2, is disposed in the operator section 321 321 of the machine body 30. The disabling switch 37 may be disposed integrally with the display device 2, and in this case, the disabling switch 37 may be implemented on a touch panel, for example.

The machine body 30 further includes a communication terminal, a fuel tank, and a battery in addition to the above components. The machine body 30 further includes sensors for monitoring an operation condition of the machine body 30, and examples of the sensors include a coolant temperature sensor, a hydraulic oil temperature sensor, a tachometer for measuring an engine speed, and an hour meter for measuring an operation time.

### 2. Configuration of Control System

Next, a configuration of the control system 1 according to this embodiment will be described with reference to FIG. 2. The control system 1 controls the individual sections of the machine body 30 (including the traveling section 31, the swivel section 32, and the work section 33). In this embodiment, as described above, the machine body 30 of the work machine 3 is mounted with the hydraulic actuators, such as the hydraulic motors 43 of the traveling section 31, the hydraulic motor of the swivel section 32, and the hydraulic cylinders 44 of the work section 33 as "drive sections" for driving the work machine 3. The control system 1 is a component of the work machine 3 and, together with the machine body 30 and the like, constitutes the work machine 3. In other words, the work machine 3 according to this embodiment at least includes the control system 1 and the machine body 30 (including the traveling section 31, the swivel section 32, and the work section 33).

As illustrated in FIG. 2, the control system 1 includes a display processor 11, an acquisition processor 12, a detector 13, a restriction processor 14, an alert processor 15, and a disabling processor 16. As an example in this embodiment, the control system 1 is mainly constituted by a computer system having one or more processors, and the plurality of functional sections (display processor 11 and the like) are realized when the one or more processors execute a work machine control program. The plurality of functional sections included in the control system 1 may be dispersed in a plurality of housings, or may be included in a single housing.

The control system 1 is communicable with the devices included in the sections of the machine body 30. Specifically, to the control system 1, at least the first restriction sections 48 (first control valves 481), the second restriction section 49 (electromagnetic proportional valve 492), the left camera 341, the right camera 342, the rear camera 343, the display device 2, the sound generator 36, and the disabling switch 37 are connected. Accordingly, the control system 1 can control the first restriction sections 48, the second restriction section 49, the display device 2, the sound generator 36, and the like, and obtain images captured by the left camera 341, the right camera 342, the rear camera 343, and the like. The control system 1 may directly exchange various types of information (data) with the devices, or may indirectly exchange such information (data) with the devices via a relay or the like.

The display processor 11 executes a display process of displaying, on the display device 2, the display screen Dp1 including information relating to the work machine 3. Specifically, for example, based on data acquired by the acquisition processor 12, the display processor 11 generates the display screen Dp1, and controls the display device 2 to cause the display section 23 of the display device 2 to display the display screen Dp1. Furthermore, the display processor 11 is operated in accordance with an operation received by the manipulation section 22 of the display device 2.

Here, the information relating to the work machine 3 included in the display screen Dp1 includes operation information on the operation state of the work machine 3, such as an amount of remaining fuel, a cooling water temperature, a hydraulic oil temperature, and a suspended weight during lifting work. Specifically, the display processor 11 can display, on the display device 2, the display screen Dp1 that includes the operation information on the operation state of the work machine 3. Furthermore, as the information relating to the work machine 3 included in the display screen Dp1, images captured by the left camera 341, the right camera 342 and the rear camera 343 are displayed on the display screen Dp1. That is, the display processor 11 may display the display screen Dp1 including the captured images in the monitoring area A1 (individual small areas A11, A12, and A13) around the work machine 3 in the display device 2.

The term "screen" as in the display screen Dp1 used in the present disclosure refers to a video (image) displayed on the display device 2, and includes an icon, a figure, a photograph, text, and a moving image. That is, the control system 1 may display, on the display device 2, the display screen Dp1 including a graphic image representing information on the operation state of the work machine 3, such as cooling water temperature and hydraulic oil temperature, for example. When the display screen Dp1 includes a moving image and the like, the display screen Dp1 includes not a constant video but a video that changes every moment.

The acquisition processor 12 executes an acquisition process of acquiring various data relating to the work machine 3, such as the captured images of the monitoring area A1 around the work machine 3. In this embodiment, the acquisition processor 12 acquires outputs from the left camera 341, the right camera 342, and the rear camera 343 on a regular or irregular basis. That is, the acquisition processor 12 acquires image data (captured images) of the monitoring area A1 (the small areas A11, A12, and A13) around the work machine 3.

Furthermore, the acquisition processor 12 can regularly or irregularly acquire information on motion states of the individual sections of the work machine 3, at least including a pressure detection signal supplied from the pressure sensor 38 indicating an operation state of the operation device 35 (operation levers 351 and 352) and the operation state of the disabling switch 37 through the acquisition process. Here, the acquisition processor 12 can also acquire outputs (sensor signals) of a remaining fuel amount sensor, the cooling water temperature sensor, and the hydraulic oil temperature sensor. The acquisition processor 12 may acquire various types of data directly from the various sensors and the like (including cameras), or indirectly through an electronic control unit or the like. The data acquired by the acquisition processor 12 is stored in a memory, for example.

The detector 13 detects (senses) a detection target Ob1 in the monitoring area A1 around the machine body 30. Specifically, the detector 13 determines presence or absence (existence or nonexistence) of the detection target Ob1 in the monitoring area A1, and outputs a detection result indicating whether the detection target Ob1 is included in the monitoring area A1. In this embodiment, the detection target Ob1 is a "person", for example. In other words, when a "person" enters the monitoring area A1 around the work machine 3 as a result of a movement of the work machine 3 or a movement of the "person" around the work machine 3, the detector 13 detects the "person" as the detection target Ob1. When a plurality of detection targets Ob1 are present in the monitoring area A1, the detector 13 may also detect the number of detection targets Ob1.

In this embodiment, the detector 13 detects the detection target Ob1 in the monitoring area A1 based on outputs (image data) of the left camera 341, the right camera 342, and the rear camera 343.
Specifically, the detector 13 performs image processing on data of an image acquired by the acquisition processor 12 to extract feature values in the image, and determines based on the feature values whether the image includes the detection target Ob1 ("person" in this embodiment). Here, when the detection target Ob1 is included in the image, the detector 13 determines one of the images captured by the left camera 341, the right camera 342, and the rear camera 343 that includes the detection target Ob1. In other words, the detector 13 determines whether the detection target Ob1 is included in the small area A11 captured by the left camera 341, the small area A12 captured by the right camera 342, or the small area A13 captured by the rear camera 343 in the detection of the detection target Ob1.

Furthermore, in this embodiment, the detector 13 can also detect a distance from the machine body 30 to the detection target Ob1. Specifically, when the detection target Ob1 is included in the image, the detector 13 calculates the distance from the machine body 30 to the detection target Ob1 based on a position of the detection target Ob1 in the image. Therefore, the detector 13 can detect, for example, the detection target Ob1 that is present within a certain distance (e.g., 2 m, 3 m, 4 m or 5 m, etc.) from the machine body 30. In other words, the detector 13 may detect the detection target Ob1 not only in the monitoring area A1 corresponding to an entire area captured by the left camera 341, the right camera 342, and the rear camera 343, but also in the monitoring area A1 having a size and a shape which are arbitrarily set.

The restriction processor 14 executes a restriction process of restricting a motion of the work machine 3 based on a detection result of the detector 13. In this embodiment, the restriction processor 14 executes the restriction process when a detection result of the detector 13 satisfies a specific condition and a specific operation is performed on the operation device 35 of the work machine 3. Specifically, the restriction processor 14 executes the restriction process based on an operation state of the operation device 35 in addition to a detection result of the detector 13.

The term "restriction process" as used in the present disclosure refers to a process that leads to restriction (suppression) of a motion of the work machine 3. For example, the restriction process includes a process of directly restricting a motion of the work machine 3 by controlling the traveling section 31, the swivel section 32, the work section 33, and the like of the work machine 3. Examples of the restriction process include a process of prohibiting (disabling) a traveling motion of the traveling section 31, a process of prohibiting (disabling) a swivel motion of the swivel section 32, and a process of prohibiting (disabling) a motion of the work section 33. Accordingly, a motion of the work machine 3 may be forcibly restricted regardless of an operation performed by the user U1 (operator). That is, contact between the machine body 30 and the detection target Ob1 caused by a motion of the work machine 3 can be avoided.

In this embodiment, the restriction processor 14 controls at least one of the first restriction sections 48 and the second restriction section 49. The restriction processor 14 restricts motions of the individual drive sections (hydraulic actuators), such as the hydraulic motors 43 of the traveling section 31, the hydraulic motor of the swivel section 32, and the hydraulic cylinders 44 of the work section 33 by actuating the first restriction sections 48 to close the first control valves 481. Specifically, when the restriction processor 14 actuates the first restriction sections 48, the first control valves 481 shut off the flow paths of the pilot oil and stop the supply of the hydraulic oil from the hydraulic pump 41 to the hydraulic actuators, thereby forcibly stopping motions of the hydraulic actuators.

Furthermore, the restriction processor 14 collectively restricts motions of the plurality of drive sections (hydraulic actuators), such as the hydraulic motors 43 of the traveling section 31, the hydraulic motor of the swivel section 32, and the hydraulic cylinders 44 of the work section 33 by actuating the second restriction section 49 to close the electromagnetic proportional valve 492. Specifically, when the restriction processor 14 actuates the second restriction section 49, the electromagnetic proportional valve 492 restricts an amount of the hydraulic oil to be discharged from the hydraulic pump 41 and stops the supply of the hydraulic oil from the hydraulic pump 41 to the hydraulic actuators, thereby forcibly stopping motions of the hydraulic actuators.

Here, the restriction process performed by the restriction processor 14 includes a process of restricting at least one of a traveling motion of the traveling section 31 and a swivel motion of the swivel section 32. Specifically, the restriction processor 14 closes the first control valves 481 or the electromagnetic proportional valve 492 to stop the supply of the hydraulic oil from the hydraulic pump 41, thereby at least disabling drive of the hydraulic motor of the swivel section 32, which causes the swivel section 32 to come to an emergency stop when the swivel section 32 is in a swivel motion and prohibits the swivel motion of the swivel section 32 when the swivel section 32 is not in the swivel motion. Accordingly contact between the machine body 30 and the detection target Ob1 caused by swivel of the swivel section 32 may be avoided, when the detection target Ob1 is included in the monitoring area A1 which is a blind spot for the user U1 (operator).

The alert processor 15 outputs an alert, that is, performs reporting. The alert processor 15 performs an alert process of outputting (reporting) an alert based on a result of the detection performed by the detector 13, that is, a result of the detection of the detection target Ob1 in the monitoring area A1 around the machine body 30. In particular, the alert processor 15 outputs an alert when the detection target Ob1 is included in the monitoring area A1.

The "reporting" as used in the present disclosure means an output of an alert to the user (operator) by various measures, including, for example, sound (including voice), display (including lighting of display light), vibration (vibration function), sending to another terminal, or writing in a non-transitory recording medium. However, the alert processor 15 basically performs the reporting in a mode that causes the user (operator) to recognize the alert in real time. As one example in this embodiment, the alert processor 15, when the detection target Ob1 is included in the monitoring area A1 around the machine body 30, causes the display section 23 of the display device 2 to display the fact, and causes the sound generator 36 to output an alarm. The alarm may be a simple beep or voice, such as a message "Please be careful". Furthermore, content of the alert (display content and alarm) may vary according to a detection result of the detector 13 (position of the detection target Ob1, distance from the machine body 30 to the detection target Ob1, and the like).

The disabling processor 16 disables the restriction process in response to an operation performed by the user U1 (operator). Specifically, the restriction process of the restriction processor 14 is not always enabled, but can be switched between an enabled state and a disabled state in accordance with an operation performed by the user U1 (operator). In the restriction process being enabled, the restriction processor 14 executes the restriction process when a detection result of the detector 13 satisfies the specific condition and the specific operation is performed on the operation device 35 of the work machine 3. On the other hand, in the restriction process being disabled, the restriction processor 14 does not execute the restriction process even when a detection result of the detector 13 satisfies the specific condition and the specific operation is performed on the operation device 35 of the work machine 3. Therefore, for example, even when the detection target Ob1 is included in the monitoring area A1 and a detection result of the detector 13 satisfies the specific condition, the user U1 (operator) recognizes the presence of the detection target Ob1 and then disables the restriction process. Thus, even when the detection target Ob1 is included in the monitoring area A1, the work machine 3 may continue the work.

As an example in this embodiment, the switching between an enabled state and a disabled state of the function (restriction processor 14) associated with the restriction process is performed by the user U1 (operator) operating the disabling switch 37. Specifically, when the user U1 operates the disabling switch 37 in a state in which the restriction process is enabled, the disabling processor 16 disables the function associated with the restriction process in response to the operation. On the other hand, when the user U1 operates the disabling switch 37 in a state in which the restriction process is disabled, the disabling processor 16 enables the function associated with the restriction process in response to the operation. In this embodiment, the disabling processor 16 performs switching between enabling and disabling of the restriction process in response to an operation performed by the user U1 as described above. Therefore, for example, the user U1 (operator) voluntarily disables the restriction process when the user U1 recognizes the presence of the detection target Ob1, so that the work machine 3 easily continues the work even when the detection target Ob1 is included in the monitoring area A1.

Here, status information indicating enabling or disabling of the restriction process performed by the disabling processor 16 is presented by various means for the user (operator), for example. Examples of the means for presenting the status information include sound (including voice), display (including lighting of display light), vibration (vibration function), sending to another terminal, or writing in a non-transitory recording medium. The disabling processor 16 presents the status information by causing the display section 23 of the display device 2 to display the status information and causing the sound generator 36 to output sound. Thus the disabling processor 16 presents the status information indicating enabling or disabling of the restriction process. Accordingly, the user U1 (operator) may perform work using the work machine 3 while recognizing enabling or disabling of the restriction process.

Here, the detector 13 is not an essential component of the control system 1. For example, the control system 1 may be configured such that a detection result of an external detector is acquired and the restriction processor 14 executes the restriction process based on the detection result.

### 3. Method for Controlling Work Machine

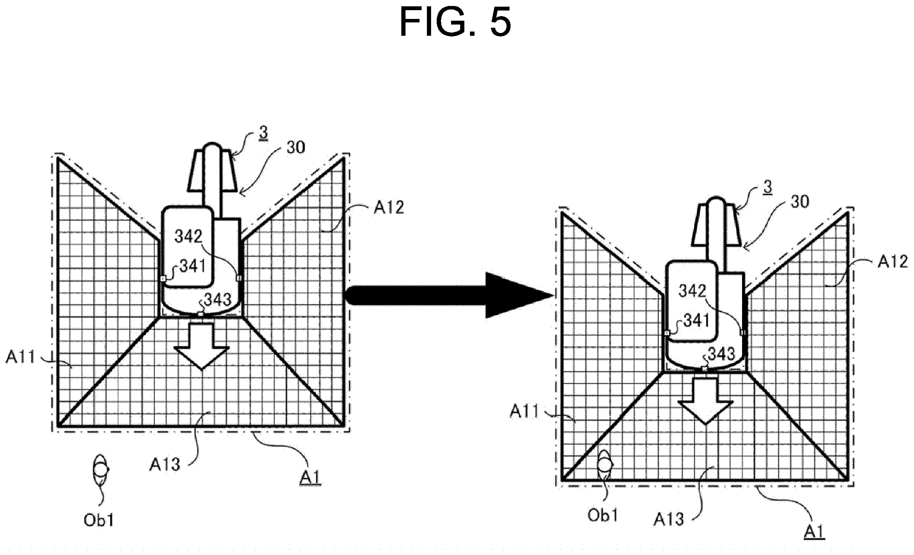

An example of a method for controlling the work machine 3 that is mainly executed by the control system 1 (hereinafter simply referred to as a "control method") will be described hereinafter with reference to FIGS. 5 to 7.

The control method according to this embodiment is executed by the control system 1 that has a computer system as a main component, and thus, in other words, is embodied by a work machine control program (hereinafter simply referred to as a "control program"). Specifically, the control program according to this embodiment is a computer program that causes one or more processors to perform processes relating to the control method. The control program may be executed by the control system 1 and the display device 2 in cooperation with each other, for example.

Here, when a specific start operation for executing the control program that is set in advance is performed, the control system 1 executes the following various processes relating to the control method. Examples of the start operation include an operation of starting the engine of the work machine 3. On the other hand, the control system 1 terminates the following various processes relating to the control method, in response to a specific termination operation that is set in advance. Examples of the termination operation include an operation of stopping the engine of the work machine 3.

### 3.1 Condition for Restriction Process

First, the control method according to this embodiment, that is, a condition (execution condition) for executing the restriction process in the operation of the control system 1 according to this embodiment, will be described.

Specifically, the restriction processor 14 executes the restriction process when a detection result of the detector 13 satisfies the specific condition and the specific operation is performed on the operation device 35 of the work machine 3. In other words, the restriction process is executed when an execution condition in which a detection result of the detector 13 satisfies the specific condition and the specific operation is performed on the operation device 35 of the work machine 3 is satisfied. That is, the execution condition is satisfied only after a detection result of the detector 13 satisfies the specific condition and an additional condition (the condition in which the specific operation is performed on the operation device 35 or the like) is satisfied, and then the restriction process is executed.

In this embodiment, the specific condition includes a case where the detection target Ob1 is included in the monitoring area A1. Specifically, when a detection result of the detector 13 indicates that the detection target Ob1 ("person" in this embodiment) is included in the monitoring area A1 around the work machine 3, it is determined that the detection result satisfies the specific condition. On the other hand, when a detection result of the detector 13 indicates that the detection target Ob1 (person) is not included in the monitoring area A1 around the work machine 3, it is determined that the detection result does not satisfy the specific condition.

Furthermore, the specific operation includes an operation relating to one of traveling or swiveling of the work machine 3. That is, the "specific operation" includes an operation, performed by the operator on the operation device 35, of performing at least one of a traveling operation (forward movement, backward movement, or the like) of the traveling section 31 and a swivel operation (left swiveling, right swiveling, or the like) of the swivel section 32. Specifically, the specific operation includes at least an operation performed on the operation lever 351 for accepting an operation relating to the traveling operation of the traveling section 31 and an operation performed on an operation lever for accepting an operation relating to the swivel operation of the swivel section 32.

Thus, since the specific operation includes at least one of the operation relating to traveling and the operation relating to swiveling of the work machine 3, the restriction process is executed only when at least one of the operation relating to traveling and the operation relating to swiveling is executed in addition to the case where a detection result of the detector 13 satisfies the specific condition. Therefore, when only the condition in which the detection target Ob1 is included in the monitoring area A1 is satisfied, the restriction process is not executed on an operation relating to an extending operation and a retracting operation of the work section 33, and the work section 33 may continue the work.

It is assumed in this embodiment that only the operation relating to traveling is included in the specific operation among the operation relating to traveling and the operation relating to swiveling of the work machine 3. Specifically, when the operation lever 351 for accepting the operation relating to the traveling motion is operated to a position other than a neutral position, it is determined that the specific operation has been performed. Therefore, it is determined that the specific operation has not been performed, as long as the operation lever 351 is in the neutral position, even when the operation lever for accepting an operation relating to the swivel motion of the swivel section 32 or the operation lever 352 for accepting an operation relating to the extending motion, the retracting motion, and the like of the work section 33 is operated.

As described above, the execution condition is satisfied only when a detection result of the detector 13 satisfies the specific condition (also referred to as a "first condition") and the specific operation is performed on the operation device 35 of the work machine 3 (also referred to as a "second condition"), and then the restriction process is executed. Here, according to this embodiment, timings when the two conditions (first and second conditions) are satisfied are not particularly limited, and the execution condition is satisfied when both the first and second conditions are satisfied irrespective of the order of the timings of the satisfying of the first and second conditions.

First, in the control method according to this embodiment, the restriction process is executed when the detection result satisfies the specific condition during the specific operation. In other words, it is determined that the execution condition is satisfied when the first condition is satisfied since the detection result of the detector 13 satisfies the specific condition in a state in which the second condition is first satisfied since the specific operation is performed on the operation device 35, and then the restriction process is executed. Accordingly, the restriction process may be executed even when a timing when the specific operation is performed on the operation device 35 is shifted from a timing when the detection result of the detector 13 satisfies the specific condition.

Furthermore, according to the control method of this embodiment, the restriction process is executed also when a detection result satisfies the specific condition within a predetermined period of time after the specific operation is terminated. In other words, the execution condition is satisfied when the second condition is first satisfied since the specific operation is performed on the operation device 35 and then the first condition is satisfied since a detection result of the detector 13 satisfies the specific condition within the predetermined period of time (several seconds, for example) after the specific operation is terminated by returning the operation lever 351 to the neutral position, for example, and then the restriction process is executed. Accordingly, the restriction process may be executed as long as a detection result of the detector 13 satisfies the specific condition immediately after the specific operation is performed, even after the specific operation on the operation device 35 is terminated.

Furthermore, according to the control method of this embodiment, the restriction process is executed when the specific operation is started in the state in which a detection result satisfies the specific condition. In other words, the execution condition is satisfied when the second condition is satisfied since the specific operation is performed on the operation device 35 in a state in which the first condition is first satisfied since a detection result of the detector 13 satisfies the specific condition, and then the restriction process is executed. Accordingly, the restriction process may be executed even when a timing when a detection result of the detector 13 satisfies the specific condition is shifted from a timing when the specific operation is performed on the operation device 35.

Furthermore, according to the control method of this embodiment, the restriction process is executed also when the specific operation is started within a predetermined period of time after a detection result does not satisfy the specific condition. In other words, the execution condition is satisfied when the second condition is satisfied since the specific operation is performed on the operation device 35 within the predetermined period of time (several seconds, for example) after a detection result does not satisfy the specific condition since the detector 13 loses the detection target Ob1 even though the first condition is first satisfied since a detection result of the detector 13 satisfies the specific condition, and then the restriction process is executed. Accordingly, even after a detection result of the detector 13 does not satisfy the specific condition, the restriction process may be executed when the specific operation is performed on the operation device 35 immediately after the detection result of the detector 13 does not satisfy the specific condition.

### 3.2 Restriction Process

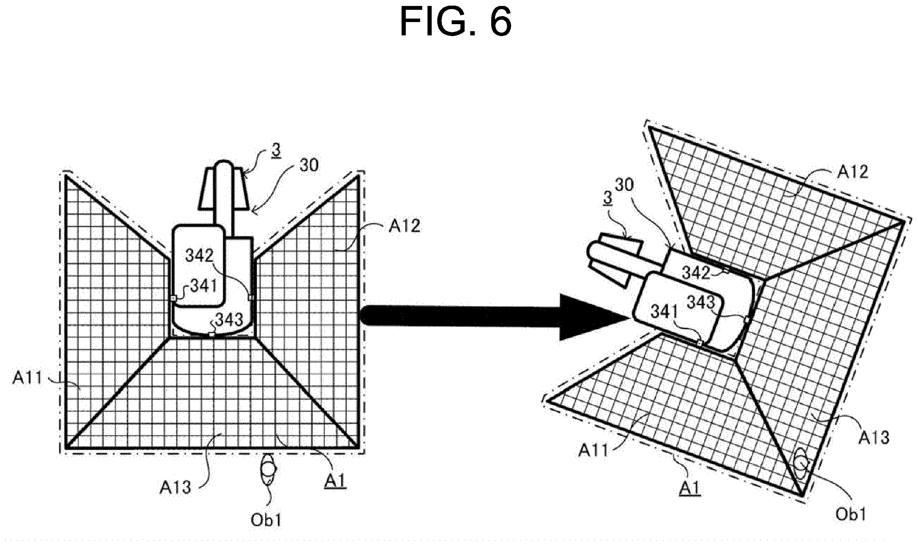

Next, the control method according to this embodiment will be described in detail with reference to FIGS. 5 and 6.

In this embodiment, when a detection result of the detector 13 indicates that the detection target Ob1 is included in the monitoring area A1 and the operation (specific operation) relating to the traveling motion of the traveling section 31 is performed on the operation device 35 (operation lever 351), the restriction processor 14 executes the restriction process of restricting motions of the work machine 3. Basically, the restriction processor 14 directly restricts a motion of the work machine 3 by controlling at least one of the first and second restriction sections 48 and 49.

Specifically, when a detection result of the detector 13 indicates that the detection target Ob1 is included in the monitoring area A1 and the operation (specific operation) relating to the traveling motion of the traveling section 31 is performed on the operation device 35, the restriction processor 14 actuates the first restriction sections 48 to restrict a motion of a desired drive section. As an example, the restriction processor 14 actuates the first restriction sections 48 corresponding to the hydraulic motors 43 of the traveling section 31 and reduces a rotation speed of the hydraulic motors 43 to cause the traveling section 31 to reduce a traveling speed of the work machine 3. However, this embodiment is not limited to this example, and the restriction processor 14 may, for example, actuate the first restriction sections 48 corresponding to one or more drive sections among the hydraulic motors 43 of the traveling section 31, the hydraulic motor of the swivel section 32, and the hydraulic cylinders 44 of the work section 33 to stop the one or more drive sections.

On the other hand, the restriction processor 14 does not execute the restriction process unless the operation (specific operation) relating to the traveling motion of the traveling section 31 is performed on the operation device 35 (operation lever 351), even when a detection result of the detector 13 indicates presence of the detection target Ob1 in the monitoring area A1. Thus, according to the control method of this embodiment, the restriction process is executed only after a detection result of the detector 13 satisfies the specific condition and in addition the specific operation is performed on the operation device 35. Accordingly, when the work machine 3 performs work in an environment in which a worker works around the work machine 3, a case where the work machine frequently enters a work-disabled state can be avoided, and accordingly, work efficiency is easily improved.

Furthermore, according to the control method of this embodiment, the restriction process includes the first restriction process of restricting a motion of an operation target performed by the specific operation and the second restriction process of restricting motions other than that of the operation target. In this embodiment, since the operation target operated by the specific operation is the traveling section 31, the first restriction process restricts a motion of the traveling section 31 and the second restriction process restricts motions of the swivel section 32, the work section 33, and the like other than the traveling section 31.

That is, when a detection result of the detector 13 indicates presence of the detection target Ob1 in the monitoring area A1 and the operation (specific operation) relating to the traveling motion of the traveling section 31 is performed on the operation device 35 (operation lever 351), the restriction processor 14 executes the first restriction process on the traveling section 31 and the second restriction process on the swivel section 32, the work section 33, and the like. Accordingly, not only a motion of the operation target (traveling section 31, for example, in this embodiment) operated by the specific operation but also motions other than that of the operation target operated by the specific operation can be restricted.

Here, the first restriction process more gently restricts a motion of the work machine 3 when compared with the second restriction process. For example, the restriction processor 14 reduces the rotation speed of the hydraulic motors 43 to reduce the traveling speed of the work machine 3 by the traveling section 31, and thereafter, stops the hydraulic motors 43 to stop the traveling section 31, as the first restriction process. Alternatively, the restriction processor 14 gradually closes the first control valves 481 corresponding to the hydraulic motors 43 to moderately reduce the rotation speed of the hydraulic motors 43 to gradually stop the traveling section 31. On the other hand, the restriction processor 14 rapidly closes the first control valves 481 corresponding to the hydraulic motor of the swivel section 32 and the hydraulic cylinders 44 of the work section 33 to stop the hydraulic motor and the hydraulic cylinders 44, and immediately stops the swivel section 32 and the work section 33 as the second restriction process.

Accordingly, since a speed for restricting a motion is changed between the operation target (traveling section 31 in this embodiment, for example) and the others, the restriction process may be finely performed on the individual portions of the work machine 3. In particular, when the operation target of the specific operation is the traveling section 31 (and/or the swivel section 32), by gently restricting a motion of the traveling section 31 (and/or the swivel section 32), it is possible to suppress impact on the operator in the work machine 3.

Furthermore, the second restriction process is different from the first restriction process in that the second restriction process may be executed irrespective of the specific operation. That is, the second restriction process of restricting motions other than a motion of the operation target (the traveling section 31 in this embodiment, for example) by the specific operation may be executed when a detection result satisfies the specific condition regardless of whether the specific operation has been performed. In this case, it is possible to impose restrictions on motions of the portions of the work machine 3 that do not relate to the specific operation, regardless of whether the specific operation has been performed.

Furthermore, a cancel condition for terminating the restriction process includes a predetermined operation of the operation device 35 that is a target of the specific operation. In this embodiment, the predetermined operation is an operation of restoration to the neutral position of the operation lever 351 that is a target of the specific operation, for example. That is, the restriction process is executed when a detection result of the detector 13 satisfies the specific condition and an operation (specific operation) relating to the traveling motion of the traveling section 31 is performed on the operation lever 351. Then after the restriction process is executed, the restriction process is not terminated when only a detection result of the detector 13 does not satisfy the specific condition. That is, the restriction process is continued until a detection result of the detector 13 does not satisfy the specific condition and the operation (predetermined operation) for restoration of the operation lever 351 to the neutral position is performed so that the cancel condition is satisfied. When the cancel condition is satisfied, the restriction process is terminated.

Accordingly, even when the detector 13 temporarily loses the detection target Ob1, for example, the restriction process is not immediately canceled. Then, when the operator intentionally performs a predetermined operation on the operation device 35 that is the target of the specific operation, the restriction process is canceled, and the work using the work machine 3 can be resumed.

Hereinafter, the control method according to this embodiment will be described in detail.

For example, as illustrated on a left side in FIG. 5, it is assumed that the operator operates the operation device 35 (operation lever 351) to cause the traveling section 31 to move rearward in a state in which a "person" serving as the detection target Ob1 is positioned outside the monitoring area A1 and on the rear side of the work machine 3. In this case, when the machine body 30 of the work machine 3 moves rearward, the monitoring area A1 also moves rearward, and therefore, as illustrated on a right side in FIG. 5, the "person" serving as the detection target object Ob1 enters the monitoring area A1 (small area A13). Accordingly, the restriction process is executed since a detection result of the detector 13 satisfies the specific condition and the specific operation is performed on the operation device 35 (operation lever 351).

Therefore, in the state of the right side in FIG. 5, the first restriction process stops the traveling section 31 after the traveling speed of the traveling section 31 is reduced, and the second restriction process immediately stops the swivel section 32, the work section 33, and the like. Thus, contact between the "person" serving as the detection target Ob1 and the work machine 3 can be avoided.

On the other hand, for example, as illustrated in a left side in FIG. 6, it is assumed that the operator operates the operation device 35 to cause the swivel section 32 to perform a leftward swivel motion in a state in which a "person" serving as the detection target Ob1 is positioned outside the monitoring area A1 and on a rear side of the work machine 3. In this case, when the machine body 30 of the work machine 3 swivels leftward, the monitoring area A1 also moves in a counterclockwise direction in FIG. 6, and therefore, as illustrated on a right side in FIG. 6, the "person" serving as the detection target object Ob1 enters the monitoring area A1 (small area A13). Although a detection result of the detector 13 thus satisfies the specific condition, the restriction process is not executed since the specific operation is not performed on the operation device 35.

Therefore, in the state of the right side in FIG. 6, the first and second restriction processes are not performed. Thus, the work machine 3 can continue the work.

Here, the alert processor 15 outputs an alert when the detection target Ob1 is included in the monitoring area A1 regardless of whether the specific operation has been performed. Therefore, the alert is output in both the state of (right side of) FIG. 5 and the state of (right side of) FIG. 6.

### 3.3 Flowchart

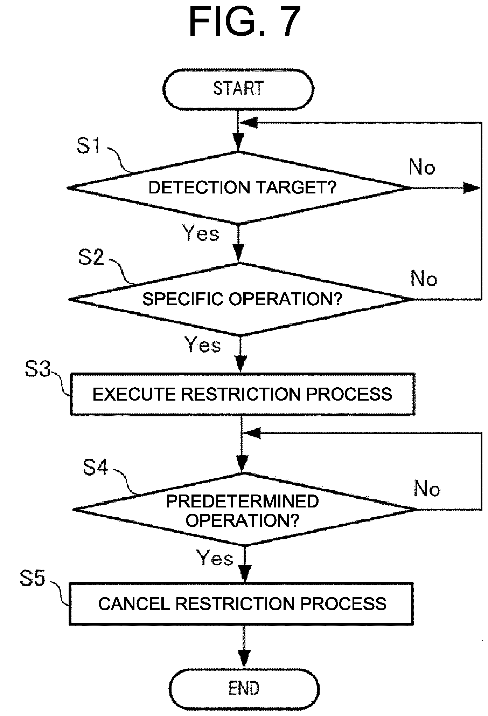

Next, a main processing flow of the control method according to this embodiment will be described with reference to a flowchart in FIG. 7.

It is assumed that, at a time when an operation of actuating the engine of the work machine 3 is performed (ignition on), the control system 1 starts a process from step S1 onward, and thereafter, repeatedly executes the process from steps S1 to S5.

In step S1, the restriction processor 14 of the control system 1 determines whether a detection result of the detector 13 satisfies the specific condition as the first condition. In this embodiment, when the detection target Ob1 is included in the monitoring area A1, the restriction processor 14 determines that the detection result satisfies the specific condition (S1: Yes), and the process proceeds to step S2. On the other hand, when the detection target Ob1 is not included in the monitoring area A1, the restriction processor 14 determines that the detection result does not satisfy the specific condition (S 1: No), and performs the process in step S1 again.

In step S2, the restriction processor 14 of the control system 1 determines whether the specific operation has been performed on the operation device 35 as the second condition. In this embodiment, when the operation lever 351 relating to the traveling motion of the traveling section 31 is operated, the restriction processor 14 determines that the specific operation has been performed (S2: Yes), and the process proceeds to step S3. On the other hand, when the operation lever 351 relating to the traveling motion of the traveling section 31 is not operated, the restriction processor 14 determines that the specific operation has not been performed (S2: No), and the process returns to step S 1.

In step S3, the restriction processor 14 of the control system 1 executes the restriction process. Specifically, the restriction processor 14 reduces the rotation speed of the hydraulic motors 43 to reduce the traveling speed of the work machine 3 by the traveling section 31, and thereafter, stops the hydraulic motors 43 to stop the traveling section 31, as the first restriction process. Furthermore, the restriction processor 14 rapidly closes the first control valves 481 corresponding to the hydraulic motor of the swivel section 32 and the hydraulic cylinders 44 of the work section 33 to stop the hydraulic motor and the hydraulic cylinders 44 and immediately stops the swivel section 32 and the work section 33, as the second restriction process.

In step S4, the restriction processor 14 of the control system 1 determines whether a predetermined operation has been performed on the operation device 35 which is a target of the specific operation. In this embodiment, when an operation of returning the operation lever 351 relating to the traveling motion of the traveling section 31 to the neutral position is performed, the restriction processor 14 determines that the predetermined operation has been performed (S4: Yes), and the process proceeds to step S5. On the other hand, when the operation of returning the operation lever 351 relating to the traveling motion of the traveling section 31 to the neutral position is not performed, the restriction processor 14 determines that the predetermined operation has not been performed (S4: No), and the process in step S4 is performed again.

In step S5, the restriction processor 14 cancels the restriction process and terminates the series of processes.

The control system 1 repeatedly executes the process in steps S1 to S5 described above. However, the flowchart illustrated in FIG. 7 is merely an example, and therefore, processes may appropriately be added or omitted, or the order of the processes may be appropriately changed.

As described above, according to the control method of this embodiment, the restriction process of restricting a motion of the work machine 3 is executed (S3) when a detection result of the detector 13 that detects the detection target Ob1 in the monitoring area A1 around the work machine 3 satisfies the specific condition (S1: Yes) and the specific operation is performed on the operation device 35 of the work machine 3 (S2: Yes).

With this configuration, the restriction processor 14 does not execute the restriction process until the specific operation is performed on the operation device 35 (operation lever 351) even when a detection result of the detector 13 satisfies the specific condition. Thus, according to the control method of this embodiment, the restriction process is executed only after a detection result of the detector 13 satisfies the specific condition and in addition the specific operation is performed on the operation device 35. Accordingly, when the work machine 3 performs work in an environment in which a worker works around the work machine 3, a situation in which the work machine frequently enters a work-disabled state can be avoided, and accordingly, work efficiency is easily improved.

### 3.4 Other Operations

As other operations, content of the restriction process may be changed in accordance with the order of the specific operation start timing and the timing when a detection result satisfies the specific condition.

Specifically, content of the restriction process is changed between a case where the first condition is satisfied when a detection result of the detector 13 satisfies the specific condition in a state in which the specific operation is first performed on the operation device 35 and so the second condition is satisfied and a case where the second condition is satisfied when the specific operation is performed on the operation device 35 in a state in which a detection result of the detector 13 first satisfies the specific condition so the first condition is satisfied. As an example, the content of the restriction process in each case is preferably set such that a motion of the work machine 3 is more gently restricted in the former case in which the second condition is first satisfied than in the latter case in which the first condition is first satisfied.

Accordingly, in the case where a detection result of the detector 13 satisfies the specific condition in the state in which the specific operation is first performed on the operation device 35, a motion of the work machine 3 may be gently restricted and impact on the operator in the work machine 3 may be suppressed.

Furthermore, the specific condition may include, in addition to the condition in which the detection target Ob1 is included in the monitoring area A1, a condition in which the detection target Ob1 is positioned in a traveling direction in the monitoring area A1 of the work machine 3 traveling in accordance with the specific operation performed on the operation device 35. That is, for example, when the operation lever 351 is operated to move the traveling section 31 forward, the specific condition is satisfied only when the detection target Ob1 is positioned in front of the work machine 3, and the specific condition is not satisfied when the detection target Ob1 is positioned behind or beside the work machine 3.

### 4. Modifications

Modifications of the first embodiment will be listed below. The modifications described below may be applied in appropriate combination.

The control system 1 in the present disclosure includes a computer system. The computer system mainly includes, as hardware, one or more processors and one or more memories. When the processor executes a program that is stored in the memory of the computer system, the function as the control system 1 in the present disclosure is implemented. The program may be recorded in the memory of the computer system in advance, may be provided through a telecommunication line, or may be provided in a manner to be recorded in a non-transitory recording medium, such as a memory card, an optical disk, or a hard disk drive, each of which is readable by the computer system. Moreover, a part or all of the functional sections included in the control system 1 may be configured by an electronic circuit.

A configuration in which at least some of the functions of the control system 1 are integrated in one housing is not essential for the control system 1, and the components of the control system 1 may be disposed in a plurality of housings in a distributed manner. On the contrary, the functions that are provided in the plurality of devices in the distributed manner (for example, the control system 1 and the display device 2) in the first embodiment may be integrated in a single housing. Furthermore, at least some of the functions of the control system 1 may be realized by cloud (cloud computing) or the like.

Furthermore, the specific operation includes an operation relating to one of traveling or swiveling of the work machine 3, and may include an operation relating to swiveling (swivel motion of the swivel section 32) in addition to or instead of the operation relating to traveling.

Moreover, a power source of the work machine 3 is not limited to a diesel engine but may be an engine other than a diesel engine, or may be a motor (electric motor) or a hybrid-type power source including an engine and a motor (electric motor), for example.

Furthermore, the operation lever of the operation device 35 may be an electric operation device which accepts various operations performed by the user by outputting electric signals (operation signals) in accordance with operations performed by the user (operator) to the control system 1. In this case, the control system 1 can control the hydraulic actuators by controlling, for example, control valves (solenoid valve) provided in place of the remote control valves 45 in accordance with an operation performed on the operation device 35 (operation lever).

Furthermore, the display device 2 is not limited to a dedicated device, but may be a general-purpose terminal, such as a laptop computer, a tablet terminal, or a smartphone. Furthermore, the display section 23 may not necessarily be configured to directly display a display screen as with a liquid crystal display or an organic EL display, and for example, the display section 23 may be configured to display a display screen by projection as with a projector.

As an information input mode of the manipulation section 22, a mode other than a push-button switch, a touchscreen, and an operation dial may be adopted. For example, the manipulation section 22 may adopt an input mode using a keyboard or a pointing device, such as a mouse, a voice input mode, a gesture input mode, an input mode of an operation signal from another terminal, or the like.

Furthermore, an output (information presentation) mode of the alert in the alert processor 15 is not limited to the display on the display section 23 of the display device 2 and output of an alarm from the sound generator 36. For example, the alert processor 15 may output an alert by any one of the display on the display section 23 of the display device 2 or the alarm from the sound generator 36, or by other means, such as vibration (vibration function), sending to another terminal or writing in the non-transitory recording medium, or a combination of these.

The sensors for detecting the detection target Ob1 in the monitoring area A1 around the machine body 30 may not necessarily be the left camera 341, the right camera 342, and the rear camera 343, and may include one, two, or four or more cameras (image sensors). Furthermore, for example, a camera capable of capturing images in all directions seen from the work machine 3, such as an entire celestial sphere camera (360-degree camera), may be used to detect the detection target Ob1 in the monitoring area A1. The sensors for detecting the detection target Ob1 in the monitoring area A1 may include, in addition to or instead of the cameras, for example, sensors, such as a motion sensor, a sonar sensor, a radar or Light Detection and Ranging (LiDAR). Here, the sensor for detecting the detection target Ob1 in the monitoring area A1 may be a three-dimensional sensor that measures a distance to the detection target Ob1 by a time of flight (TOF) method which measures a distance to a distance measurement point based on a round trip time taken by light or sound to reach the distance measurement point and return from the distance measurement point.

Furthermore, the detection target Ob1 may include, in addition to or instead of a "person", a movable object, such as a vehicle (including other work machines), a structure, such as a wall or a pillar, a plant, an animal, a step, a groove, or other obstacles.

The actuators in the individual sections of the machine body 30 are not limited to the hydraulic actuators. For example, each of the actuators may be a pneumatic actuator that is driven by a pneumatic pressure of compressed air or the like, may be an electric actuator that is driven by supplied electricity, or may be a combination of these.

### Appendices

Hereinafter, the summary of the present disclosure extracted from the above-described embodiment will be supplemented. Note that individual configurations and individual processing functions described in the following supplementary notes may be selected, omitted, and combined as appropriate.

### Appendix 1

A work machine control method, comprising:
executing a restriction process of restricting a motion of a work machine when a result of detection performed by a detector that detects a detection target in a monitoring area around the work machine satisfies a specific condition and a specific operation is performed on an operation device of the work machine.

### Appendix 2

The work machine control method according to Appendix 1, wherein
the specific operation includes an operation relating to one of traveling or swivel of the work machine.

### Appendix 3

The work machine control method according to Appendix 1 or 2, wherein
the restriction process includes a first restriction process of restricting a motion of an operation target by the specific operation and a second restriction process of restricting motions other than the operation of the operation target.

### Appendix 4

The work machine control method according to Appendix 3, wherein
the first restriction process gently restricts a motion of the work machine as compared to the second restriction process.

### Appendix 5

The work machine control method according to any one of Appendices 1 to 4, wherein
the restriction process is executed when the detection result satisfies the specific condition during the specific operation.

### Appendix 6

The work machine control method according to Appendix 5, wherein
the restriction process is executed when the detection result satisfies the specific condition within a predetermined period of time after a termination of the specific operation.

### Appendix 7

The work machine control method according to any one of Appendices 1 to 6, wherein
the restriction process is executed when the specific operation is started while the detection result satisfies the specific condition.

### Appendix 8

The work machine control method according to Appendix 7, wherein
the restriction process is also executed when the specific operation is started within a predetermined period of time after the detection result does not satisfy the specific condition.

### Appendix 9

The work machine control method according to any one of Appendices 1 to 8, wherein
content of the restriction process is changed in accordance with the order of a timing when the specific operation is started and a timing when the detection result satisfies the specific condition.

### Appendix 10

The work machine control method according to any one of Appendices 1 to 9, wherein
a cancel condition for terminating the restriction process includes a predetermined operation of the operation device that is a target of the specific operation.

### Appendix 11

The work machine control method according to any one of Appendices 1 to 10, further comprising:
disabling the restriction process in accordance with an operation performed by a user.

### Appendix 12

The work machine control method according to Appendix 11, further comprising:
presenting state information indicating enabling or disabling of the restriction process.

### Appendix 13

A work machine control program that causes one or more processors to execute the work machine control method according to any one of Appendices 1 to 12.

### REFERENCE SIGNS LIST

1 work machine control system
3 work machine
13 detector
14 restriction processor
30 machine body
35 operation device
A1 monitoring area
Ob1 detection target

## Claims

1. A work machine control method, comprising:
executing a restriction process of restricting a motion of a work machine when a result of detection performed by a detector that detects a detection target in a monitoring area around the work machine satisfies a specific condition and a specific operation is performed on an operation device of the work machine.

2. The work machine control method according to claim 1, wherein
the specific operation includes an operation relating to one of traveling or swivel of the work machine.

3. The work machine control method according to claim 1 or 2, wherein
the restriction process includes a first restriction process of restricting a motion of an operation target by the specific operation and a second restriction process of restricting motions other than the operation of the operation target.

4. The work machine control method according to claim 3, wherein
the first restriction process gently restricts a motion of the work machine as compared to the second restriction process.

5. The work machine control method according to claim 1 or 2, wherein
the restriction process is executed when the detection result satisfies the specific condition during the specific operation.

6. The work machine control method according to claim 5, wherein
the restriction process is also executed when the detection result satisfies the specific condition within a predetermined period of time after a termination of the specific operation.

7. The work machine control method according to claim 1 or 2, wherein
the restriction process is executed when the specific operation is started while the detection result satisfies the specific condition.

8. The work machine control method according to claim 7, wherein
the restriction process is also executed when the specific operation is started within a predetermined period of time after the detection result does not satisfy the specific condition.

9. The work machine control method according to claim 1 or 2, wherein
content of the restriction process is changed in accordance with the order of a timing when the specific operation is started and a timing when the detection result satisfies the specific condition.

10. The work machine control method according to claim 1 or 2, wherein
a cancel condition for terminating the restriction process includes a predetermined operation of the operation device that is a target of the specific operation.

11. The work machine control method according to claim 1 or 2, further comprising:
disabling the restriction process in accordance with an operation performed by a user.

12. The work machine control method according to claim 11, further comprising:
presenting state information indicating enabling or disabling of the restriction process.

13. A work machine control program that causes one or more processors to perform the work machine control method according to claim 1 or 2.

14. A work machine control system, comprising:
a restriction processor that restricts a motion of a work machine when a result of detection performed by a detector that detects a detection target in a monitoring area around the work machine satisfies a specific condition and a specific operation is performed on an operation device of the work machine.

15. A work machine, comprising:
the work machine control system according to claim 14; and
a machine body.
